# EUROPÄISCHE PATENTSCHRIFT

(11) **EP 2 069 042 B1**
(45) Veröffentlichungstag und Bekanntmachung des Hinweises auf die Patenterteilung: **01.07.2015**
(21) Anmeldenummer: 07820368.4
(22) Anmeldetag: 20.09.2007
(51) Int. Cl.: B01D 45/16

(54) **VORRICHTUNG ZUM ABSCHEIDEN VON PARTIKELN AUS EINEM GASSTROM**
DEVICE FOR SEPARATING PARTICLES FROM A GAS FLOW
DISPOSITIF DE SÉPARATION DE PARTICULES D'UN COURANT DE GAZ

(30) Priorität: 02.10.2006 DE 202006015231 U
(43) Veröffentlichungstag der Anmeldung: 17.06.2009
(73) Patentinhaber: MANN + HUMMEL GMBH, 71638 Ludwigsburg (DE)
(72) Erfinder: BLOSSEY, Werner, 71726 Benningen (DE); RIEGER, Mario, 71638 Ludwigsburg (DE); FRITZSCHING, Torsten, 71665 Vaihingen (DE); KLOTZ, Bernhard, 71364 Winnenden (DE)
(86) Internationale Anmeldenummer: PCT/EP2007/059924
(87) Internationale Veröffentlichungsnummer: WO 2008/040639

(56) Entgegenhaltungen:
- FR-A- 962 402
- US-A- 3 930 816
- US-A- 4 141 705
- US-A- 4 746 340

## Beschreibung

### Stand der Technik

Die Erfindung betrifft eine Vorrichtung zum Abscheiden von Partikeln aus einem Gasstrom, insbesondere zur Abscheidung von flüssigen oder festen Partikeln, wie zum Beispiel Öl oder Staub, nach den gattungsgemäßen Merkmalen des Hauptanspruchs.

Beispielsweise ist aus der DE 190 42 219 A1 eine Ölabscheidevorrichtung für die Abscheidung von Öl aus sogenannten Blow-By-Gasen beschrieben, die als Verbrennungsgase aufgrund von Undichtigkeiten in Kurbelgehäusen einer Brennkraftmaschine entweichen. In diesem Ölabscheider werden die Ölbestandteile an Strömungshindernissen ausgeschieden, an denen sich die Ölpartikel im Gasstrom anlagern können.

Ferner ist aus der DE 103 23 343 A1 eine Abscheideeinrichtung bekannt, die zweistufig aufgebaut ist und zwei in Reihe geschaltete Zyklone aufweist, durch die der zu reinigende Gasstrom, nachdem er über Leitschaufeln in eine Rotation versetzt worden ist, geleitet wird. Über eine abgestimmte Größenrelation der beiden Zyklone kann dabei der Volumenstrombereich sowie der Abscheidegrad beeinflusst werden und die Herausführung der abgeschiedenen Partikel erfolgt über seitlich umlaufende Ringräume zwischen einem Tauchrohr und dem Gehäuserohr, durch die der Gasstrom geleitet wird.

Aus der US 4746340 A1 ist ein Luftfilter bekannt, welcher eine Vielzahl an regelmäßig angeordneten Zentrifugalabscheidern und ein Netzwerk regelmäßig angeordneter Auslasskanäle aufweist.

### Darstellung der Erfindung

Die Erfindung geht von einer Abscheidevorrichtung zur Abscheidung von Partikeln aus einem Gasstrom aus, bei der der Gasstrom mittels einer Leitvorrichtung in eine Rotation versetzt wird und die abzuscheidenden flüssigen oder festen Partikel über einen Auslass ableitbar sind. Die Abscheidevorrichtung besteht in vorteilhafter Weise aus einem weitestgehend zylindrischen bzw. fertigungsbedingt leicht konischem (Entformungsschräge) Gehäuserohr mit einer Leitvorrichtung und einem der Strömungsrichtung des Gasstroms folgenden im Gehäuserohr angeordneten Tauchrohr, das außen mit einer Wendel zur gerichteten Ableitung der durch die Rotation abgeschieden Partikel zu einer Gehäuseöffnung und weiterhin mit einem zentralen Auslass des gereinigten Gasstroms versehen ist.

Das Gehäuserohr und das innenliegende Tauchrohr ist dabei vorzugsweise zylindrisch aufgebaut und befindet sich in der Regel in einer waagerechten Einbauposition. Die abzuscheidenden Partikel können nach unten ausgetragen werden.

Dadurch, dass die vorgeschlagene Abscheidevorrichtung mit einem Tauchrohr mit einer Wendelkontur versehen ist, können die abzuscheidenden Partikel über die Wendel gerichtet über eine entsprechend ausgelegte Gehäuseöffnung gezielt aus der Abscheidevorrichtung ausgetragen werden. Der bisher benutzte umlaufende, öfter auch verstopfende Ringspalt zwischen den Gehäuseteilen ist daher nicht mehr notwendig, was zu einer erheblichen Steigerung des Abscheidegrades und zu einer Reduzierung des Bauraums bei der Abscheidevorrichtung führt; insbesondere wenn mehrere Zyklone im Verbund angeordnet sind. Auch ist mit der Erfindung leicht eine Verringerung des Luftwiderstandes im Gasstrom realisierbar.

Weiterhin ist auch die Möglichkeit der Zentrierung des Gehäuserohres durch das Tauchrohr beim Aneinanderfügen bei einer Vielzahl von Anwendungen vorteilhaft, insbesondere da das Tauchrohr mit der Wendel konisch nach innen in das Gehäuserohr hineinragend verjüngt ist.

Gemäß der Erfindung ist am Tauchrohr ein Führungskanal am Ausgang der Wendel gebildet, der korrespondierend mit der gegenüberliegenden Wand des Gehäuserohres zur Gehäuseöffnung für die abgeschiedenen Partikel hinführt. Hier kann auf einfache Weise der Führungskanal zu der Gehäuseöffnung durch eine Abschrägung eines Umfangbereichs am Tauchrohr gebildet werden.

Weiterhin ist es vorteilhaft, wenn die Leitvorrichtung zur Erzwingung der Rotation des Gasstromes und somit zur Bildung der Zyklone durch eine Gestaltung in Form einer stehenden Turbinenschaufel an dem Tauchrohr gegenüberliegenden Ende des Gehäuserohres am Einlass des Gasstromes gebildet ist.

Eine vorteilhafte Anwendung der Erfindung ergibt sich, wenn ein Array von Abscheidevorrichtungen dadurch gebildet ist, dass ein Gehäuseteil des Arrays eine Vielzahl von Tauchrohren enthält und dazu korrespondierend ein Gehäuseteil eine entsprechende Vielzahl von Gehäuserohren aufweist, die zur Bildung des Arrays aneinanderfügbar sind.

Insbesondere kann die Abscheidevorrichtungen oder ein Array von Abscheidevorrichtungen ein Ölabscheider für die Abscheidung von ÖL in Blow-By-Gasen eines Kurbelgehäuses bei einem Verbrennungsmotor sein.

### Kurze Beschreibung der Zeichnungen

Die Erfindung wird anhand der Zeichnungen erläutert. Es zeigen:
Figur 1 einen Längsschnitt durch eine erfindungsgemäße Abscheidevorrichtung mit einem in einem Gehäuserohr angeordneten Tauchrohr,
Figur 2 eine Draufsicht auf das Tauchrohr nach der Figur 1,
Figur 3 eine perspektivische Ansicht des Tauchrohrs nach der Figur 1 und der Figur 2 und
Figur 4 eine Anordnung mit mehreren Tauchrohren nach der Figur 3 als Bestandteil eines Arrays.

### Weg(e) zur Ausführung der Erfindung

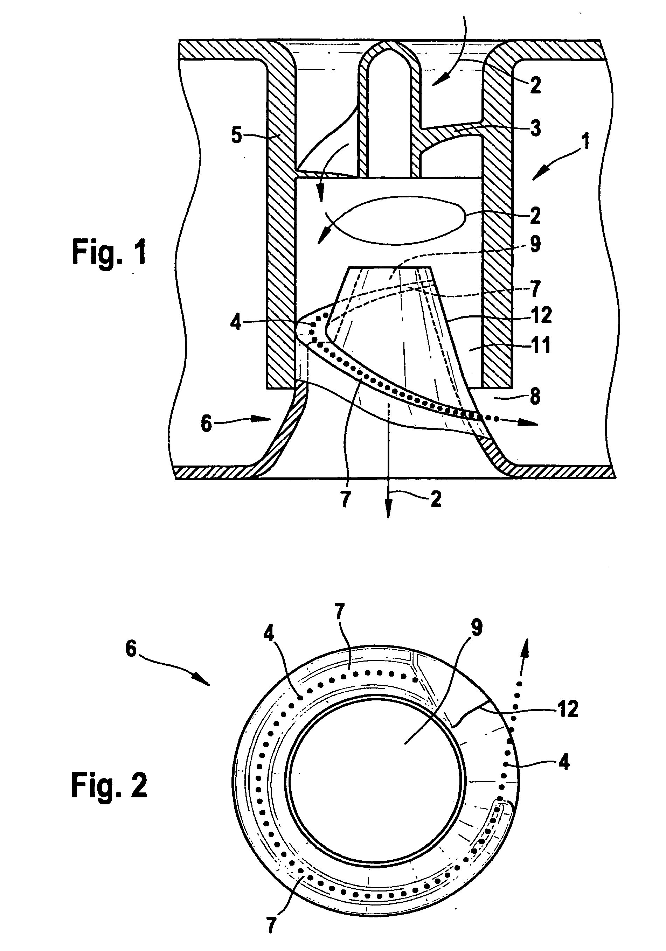

In Figur 1 ist eine Abscheidevorrichtung 1 zur Abscheidung von Partikeln aus einem Gasstrom 2 gezeigt, bei der der Gasstrom 2 mittels einer Leitvorrichtung 3, hier in Form einer stehenden Turbinenschaufel, in eine Rotation versetzt wird. Durch die Rotation des Gasstroms 2 werden die abzuscheidenden Partikel 4 zunächst an die Wand eines in der Regel zylindrischen Gehäuserohres 5 gedrückt und dann dem unten liegenden Tauchrohr 6 zugeführt.

Das Tauchrohr 6 hat außen einen überwiegend konischen Aufbau, bis auf zylindrische Bereiche zur Zentrierung des Gehäuserohres 5, und besitzt eine Wendel 7 über die die abzuscheidenden flüssigen oder festen Partikel 4 zu einer eine seitliche Gehäuseöffnung 8 zwischen dem Tauchrohr 6 und dem Gehäuserohr 5 zur gezielten Ableitung der durch die Rotation abgeschieden Partikel 4 geführt sind.

Das Tauchrohr 6 weist einen zentralen Auslass 9 des nunmehr gereinigten Gasstroms 2 auf. Weiterhin ist das Tauchrohr 6, wie zuvor erwähnt, mit der Wendel 7 konisch nach innen in das Gehäuserohr 5 hineinragend verjüngt.

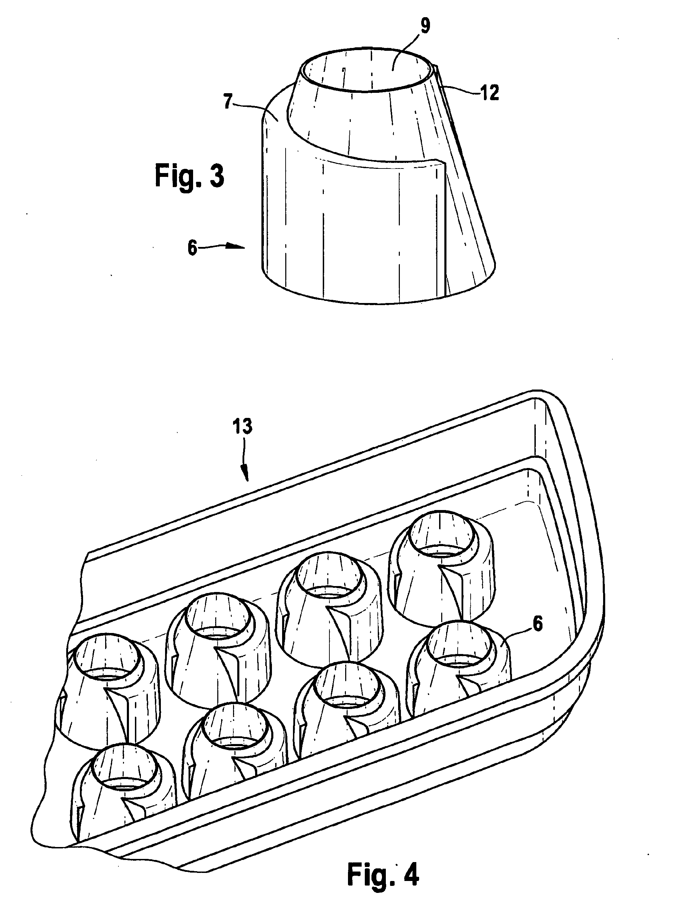

Am Tauchrohr 6 kann ein Führungskanal 11 am Ausgang der Wendel 7 zur gerichteten Zuführung der Partikel 4 dadurch gebildet werden, dass eine Abschrägung 12 eines Umfangbereichs am Tauchrohr 6 gebildet wird, wie es auch insbesondere aus der Darstellung des Tauchrohres 6 nach Figur 2 und aus der perspektivischen Darstellung nach Figur 3 ersichtlich ist.

Ein weiteres Ausführungsbeispiel der Erfindung ist in Figur 4 dargestellt, bei der ein Array 13 von Abscheidevorrichtungen dadurch gebildet ist, dass ein Gehäuseteil des Arrays 13 eine Vielzahl von Tauchrohren 6 enthält und dazu dann korrespondierend ein hier nicht gezeigtes Gehäuseteil mit einer entsprechenden Vielzahl von Gehäuserohren anfügbar ist. Hier kann die Abscheidevorrichtung 1 nach den Figuren 1 bis 3 oder das Array 13 von Abscheidevorrichtungen nach der Figur 4 zum Beispiel eine Staubvorabscheideanordnung in einem Luftansaugsystem für einen Verbrennungsmotor in einem Kraftfahrzeug sein.

## Patentansprüche

1. Abscheidevorrichtung zum Abscheiden von Partikeln (4) aus einem Gasstrom (2), bei der der Gasstrom (2) mittels einer Leitvorrichtung in eine Rotation versetzt wird und die abzuscheidenden flüssigen oder festen Partikel (4) über einen Partikelauslass ableitbar sind, wobei die Abscheidevorrichtung (1) aus einem Gehäuserohr (5) mit einer Leitvorrichtung (3) und einem der Strömungsrichtung des Gasstroms (2) folgenden im Gehäuserohr (5) angeordneten Tauchrohr (6) besteht, das außen mit einer Wendel (7) zur gezielten Ableitung der durch die Rotation abgeschiedenen Partikel (4) zu einer seitlichen Gehäuseöffnung (8) als Partikelauslass und mit einem zentralen Auslass (9) des gereinigten Gasstroms (2) versehen ist, **dadurch gekennzeichnet, dass** das Tauchrohr (6) einen zylindrischen Bereich, der das Gehäuserohr (5) zentriert, aufweist und ferner außen einen überwiegend konischen Aufbau hat und mit der Wendel (7) konisch nach innen in das Gehäuserohr (5) hineinragend verjüngt ist, wobei am Tauchrohr (6) ein Führungskanal am Ausgang der Wendel (7) gebildet ist, der korrespondierend mit der gegenüberliegenden Wand des Gehäuserohres (5) die seitliche Gehäuseöffnung (8) für die abgeschiedenen Partikel (4) bildet.

2. Abscheidevorrichtung nach Anspruch 1, **dadurch gekennzeichnet, dass** das Gehäuserohr (5) und das innenliegende Tauchrohr (6) zumindest teilweise zylindrisch aufgebaut sind mit dem jeweils untenliegenden Tauchrohr (6).

3. Abscheidevorrichtung nach einem der vorhergehenden Ansprüche, **dadurch gekennzeichnet, dass** der Führungskanal zu der Gehäuseöffnung (8) durch eine Abschrägung (12) eines Umfangbereichs am Tauchrohr (6) gebildet ist.

4. Abscheidevorrichtung nach einem der vorhergehenden Ansprüche, **dadurch gekennzeichnet, dass** die Leitvorrichtung (3) durch eine stehende Turbinenschaufel an dem dem Tauchrohr (6) gegenüberliegenden Ende des Gehäuserohres (5) am Einlass des Gasstromes (2) gebildet ist.

5. Abscheidevorrichtung nach einem der vorhergehenden Ansprüche, **dadurch gekennzeichnet, dass** ein Array (13) von Abscheidevorrichtungen (1) dadurch gebildet ist, dass ein Gehäuseteil des Arrays (13) eine Vielzahl von Tauchrohren (6) enthält und dazu korrespondierend ein Gehäuseteil eine entsprechende Vielzahl von Gehäuserohren (5) aufweist, die zur Bildung des Arrays (13) aneinanderfügbar sind.

6. Abscheidevorrichtung nach einem der vorhergehenden Ansprüche, **dadurch gekennzeichnet, dass** die Abscheidevorrichtungen oder ein Array von Abscheidevorrichtungen eine Staubvorabscheideanordnung in einem Luftansaugsystem für einen Verbrennungsmotor bilden.

7. Abscheidevorrichtung nach einem der vorhergehenden Ansprüche, **dadurch gekennzeichnet, dass** die Abscheidevorrichtungen oder ein Array von Abscheidevorrichtungen einen Ölabscheider für die Abscheidung von ÖL in Blow-By-Gasen eines Kurbelgehäuses bei einem Verbrennungsmotor bilden.

## Claims

1. Separating device for separating particles (4) from a gas flow (2), in which the gas flow (2) is put into rotation by means of a guide device and the liquid or solid particles (4) to be separated can be discharged via a particle outlet, the separating device (1) consisting of a housing tube (5) with a guide device (3) and an immersion tube (6) following the flow direction of the gas flow (2) disposed in the housing tube (5), and which is provided at the outside with a helix (7) for a targeted discharge of the particles (4) separated by the rotation to a lateral housing opening (8) designed as particle outlet and with a central outlet (9) of the cleaned gas flow (2), **characterized in that** the immersion tube (6) features a cylindrical area, which centers the housing tube (5) and has furthermore at the outside a mostly conical structure and tapers by extending conically with the helix (7) towards the inside of the housing tube (5), a guide channel being formed on the immersion tube (6) at the outlet of the helix (7), which correspondingly forms in conjunction with the oppositely positioned wall of the housing tube (5) the lateral housing opening (8) for the separated particles (4).

2. Separating device according to claim 1, **characterized in that** the housing tube (5) and the internal immersion tube (6) are at least partially cylindrically designed with the respective immersion tube (6) disposed at the bottom.

3. Separating device according to one of the above claims, **characterized in that** the guide channel towards the housing opening (8) is formed by a slant (12) of a peripheral area at the immersion tube (6).

4. Separating device according to one of the above claims, **characterized in that** the guide device (3) is formed by a fixed turbine blade at the end of the housing tube (5) oppositely positioned to the immersion tube (6) at the inlet of the gas flow (2).

5. Separating device according to one of the above claims, **characterized in that** an array (13) of separating devices (1) is formed by the fact that a housing component of the array (13) contains a plurality of immersion tubes (6) and corresponding thereto a housing component features a corresponding plurality of housing tubes (5), which can be joined to one another for forming the array (13).

6. Separating device according to one of the above claims, **characterized in that** the separating devices or an array of separating devices form a dust pre-cleaner arrangement in an air intake system for an internal combustion engine.

7. Separating device according to one of the above claims, **characterized in that** the separating devices or an array of separating devices form an oil separator for the separation of oil in blow-by gases of a crankcase in an internal combustion engine.

## Revendications

1. Dispositif de séparation pour la séparation de particules (4) d'un flux de gaz (2) dans lequel le flux de gaz (2) est mis en rotation au moyen d'un dispositif de guidage et les particules (4) liquides ou solides à séparer peuvent être évacuées par l'intermédiaire d'une sortie de particules, le dispositif de séparation (1) étant composé d'un tube de boîtier (5) avec un dispositif de guidage (3) et d'un tube plongeur (6) suivant le sens du flux de gaz (2) disposé dans le tube de boîtier (5) et pourvu à l'extérieur d'une hélice (7) servant à l'évacuation ciblée des particules (4) séparées par rotation vers une ouverture latérale (8) du boîtier, en tant que sortie de particules, et d'une sortie centrale (9) du flux de gaz (2) purifié, **caractérisé en ce que** le tube plongeur (6) présente une zone cylindrique qui centre le tube de boîtier (5) et, de plus, possède à l'extérieur une structure essentiellement conique et présente avec l'hélice (7) une forme conique vers l'intérieur qui pénètre dans le tube de boîtier (5), un canal de guidage étant formé sur le tube plongeur (6) à la sortie de l'hélice (7), ce canal constituant, en correspondance avec la paroi opposée du tube de boîtier (5), l'ouverture de boîtier (8) latérale pour les particules (4) séparées.

2. Dispositif de séparation selon la revendication 1, **caractérisé en ce que** le tube de boîtier (5) et le tube plongeur (6) intérieur présentent, au moins en partie, une forme cylindrique avec le tube plongeur (6) respectivement en dessous.

3. Dispositif de séparation selon l'une des revendications précédentes, **caractérisé en ce que** le canal de guidage vers l'ouverture du boîtier (8) est formé par un biseau (12) sur une zone circonférentielle du tube plongeur (6).

4. Dispositif de séparation selon l'une des revendications précédentes, **caractérisé en ce que** le dispositif de guidage (3) est formé par une aube de turbine fixe à l'extrémité du tube de boîtier (5) opposée au tube plongeur (6) à l'entrée du flux de gaz (2).

5. Dispositif de séparation selon l'une des revendications précédentes, **caractérisé en ce qu'**un réseau (13) de dispositifs de séparation (1) est généré par le fait qu'une partie de boîtier du réseau (13) comprend un grand nombre de tubes plongeurs (6) et que, de façon correspondante, une partie de boîtier présente un nombre correspondant de tubes de boîtier (5) pouvant être assemblés pour former le réseau (13).

6. Dispositif de séparation selon l'une des revendications précédentes, **caractérisé en ce que** les dispositifs de séparation ou un réseau de dispositifs de séparation forment un ensemble de pré-séparation de poussières dans un système d'aspiration d'air pour un moteur de combustion interne.

7. Dispositif de séparation selon l'une des revendications précédentes, **caractérisé en ce que** les dispositifs de séparation ou un réseau de dispositifs de séparation forment un séparateur d'huile destiné à la séparation d'huile dans des gaz de blow-by d'un carter de vilebrequin dans un moteur de combustion interne.
